# EUROPEAN PATENT SPECIFICATION

(11) **EP 3 093 141 B1**
(45) Date of publication and mention of the grant of the patent: **17.06.2020**
(21) Application number: 15735356.6
(22) Date of filing: 07.01.2015
(51) Int. Cl.: B29D 7/01, B32B 27/08, B32B 27/30, B29C 48/00, B29C 48/07, B29C 48/21, B29C 48/37, B29C 48/375, B29C 48/92, B29K 55/00, B29K 105/00

(54) **MULTILAYER FILM AND METHOD FOR PRODUCING SAME**
MEHRLAGIGER SCHUTZFILM UND VERFAHREN ZUR HERSTELLUNG DAVON
FILM MULTICOUCHE ET PROCÉDÉ POUR LE PRODUIRE

(30) Priority: 09.01.2014 JP 2014002553
(43) Date of publication of application: 16.11.2016
(73) Proprietor: Zeon Corporation, Tokyo 100-8246 (JP)
(72) Inventor: KOHARA Teiji, Tokyo 100-8246 (JP); ISHIGURO Atsushi, Tokyo 100-8246 (JP); SAITOU Daisuke, Tokyo 100-8246 (JP)
(74) Representative: Maiwald Patent- und Rechtsanwaltsgesellschaft mbH
(86) International application number: PCT/JP2015/050270
(87) International publication number: WO 2015/105127

(56) References cited:
- EP-A1- 2 623 526
- WO-A1-2012/043708
- JP-A- 2010 234 547
- JP-A- 2011 011 394
- JP-A- 2011 013 378
- JP-A- 2013 132 755
- JP-A- 2013 132 755
- US-A1- 2013 306 127

## Description

### TECHNICAL FIELD

The present invention relates to a multilayer film that includes a film layer formed of a resin composition that comprises a specific hydrogenated block copolymer and a UV absorber, and a method for producing the same.

### BACKGROUND ART

It is known that a hydrogenated block copolymer obtained by hydrogenating the double bonds (that are derived from an aromatic ring and a diene) of a block copolymer that comprises a polymer block that comprises a repeating unit derived from an aromatic vinyl compound as the main component, and a polymer block that comprises a repeating unit derived from a linear conjugated diene compound as the main component, exhibits excellent transparency, low birefringence, excellent heat resistance, low hygroscopicity, and the like, and a film obtained by extruding the hydrogenated block copolymer is useful as an optical film (e.g., polarizing film and a retardation film used for a liquid crystal display device) (see Patent Literature 1 to 5).

A liquid crystal display device has a configuration in which a polarizing film is provided on each side of a glass substrate that forms the surface of a liquid crystal panel. A normal polarizing film is formed by bonding a polarizer protective film that is produced using triacetyl cellulose or the like to each side of a polarizer formed of a polyvinyl alcohol-based film and a dichroic material (e.g., iodine).

The polarizer protective film has a problem in that the decomposition of the polarizer protective film is promoted when the polarizer protective film is exposed to UV rays, whereby a decrease in strength and a decrease in transparency (due to discoloration) occur. Therefore, the polarizer protective film is required to have UV absorption performance in order to prevent deterioration in the polarizer due to UV rays. The polarizer protective film is normally provided with UV absorption performance by adding a UV absorber to a triacetyl cellulose film used as the polarizer protective film.

However, triacetyl cellulose exhibits insufficient moisture-heat resistance. Therefore, when a polarizer that utilizes a triacetyl cellulose film as a polarizer protective film is used at a high temperature or high humidity, the performance (e.g., degree of polarization and hue) of the polarizer may deteriorate.

Patent Literature 6 discloses a multilayer film that includes an intermediate layer that includes a specific hydrogenated block copolymer and a UV absorber, and an outer layer that does not include a UV absorber.

Patent Literature 7 relates to an alkoxysilyl group-containing hydrogenated block copolymer that may suitably be used as an encapsulating material that encapsulates solar cell elements included in a solar cell module, a sheet that includes the solar cell element encapsulating material as well as to a laminated sheet, and discloses a laminated sheet comprising a sheet formed of a resin composition including a hydrogenated block copolymer and at least one component selected from *inter alia* a UV absorber and a sheet comprising a solar cell element encapsulating material that comprises an alkoxysilyl group-containing hydrogenated block copolymer and a specific amount of UV absorber, the alkoxysilyl group-containing hydrogenated block copolymer being obtained by introducing an alkoxysilyl group into a specific hydrogenated block copolymer.

### CITATION LIST

### PATENT LITERATURE

Patent Literature 1: JP-A-2002-53631 (US2003/207983A1)
Patent Literature 2: JP-A-2002-105151 (US2003/207983A1)
Patent Literature 3: JP-A-2003-114329
Patent Literature 4: WO2009/067290 (US2010/290117A1)
Patent Literature 5: WO2009/137278 (US2011/038045A1)
Patent Literature 6: JP-A-2011-13378
Patent Literature 7: EP 2 623 526 A1

### SUMMARY OF INVENTION

### TECHNICAL PROBLEM

The inventors produced an optical film as disclosed in Patent Literature 6, and found that the resulting film has small in-plane retardation, but exhibits low tensile elongation due to high hardness and fragility, and easily breaks when the film is wound (when the film is produced using a melt extrusion method), and cracks may occur when the film is stored in a wound state, for example.

The invention was conceived in view of the above situation. An object of the invention is to provide a multilayer film that is formed of a specific hydrogenated block copolymer, exhibits excellent UV-blocking properties and excellent mechanical strength, has excellent surface properties (i.e., rarely shows surface roughness), and is suitable as an optical film, and a method for producing the same.

### SOLUTION TO PROBLEM

The inventors conducted extensive studies in order to solve the above problem. As a result, the inventors found that a multilayer film that exhibits excellent UV-blocking properties and mechanical strength that facilitates handling can be obtained by stacking a layer formed of either or both of a specific hydrogenated block copolymer that exhibits excellent mechanical strength and a modified hydrogenated block copolymer into which an alkoxysilyl group is introduced, on a film obtained by forming a resin composition that comprises a specific hydrogenated block copolymer that rarely shows retardation and a UV absorber in a ratio equal to or larger than a specific value. The inventors also found that, when a film is produced on a casting roll using a melt extrusion method through a layer formed of either or both of a specific hydrogenated block copolymer and a specific modified hydrogenated block copolymer that do not include a UV absorber, or include a UV absorber in a ratio equal to or smaller than a specific value, the surface of the casting roll is not contaminated, and it is possible to continuously produce an optical film having excellent surface properties (surface state) for a long time. These findings have led to the completion of the invention.

Several aspects of the invention provide the following multilayer film (see (1)) and method for producing a multilayer film (see (2)).
(1) A multilayer film comprising a film F, and a layer F' that is stacked on one side or each side of the film F,
   the film F being formed of a resin composition E that comprises a hydrogenated block copolymer D, and a UV absorber, the hydrogenated block copolymer D being obtained by hydrogenating 90% or more of the unsaturated bonds of a block copolymer C that comprises at least two polymer blocks A and at least one polymer block B, the polymer block A comprising a repeating unit derived from an aromatic vinyl compound as the main component, the polymer block B comprising a repeating unit derived from a linear conjugated diene compound as the main component, and the ratio (wA:wB) of the total weight fraction wA of the polymer block A in the block copolymer C to the total weight fraction wB of the polymer block B in the block copolymer C being 40:60 to 90:10, and
   the layer F' being formed of a resin composition E' that comprises a modified hydrogenated block copolymer D", and a UV absorber, the modified hydrogenated block copolymer D" being obtained by introducing an alkoxysilyl group into the hydrogenated block copolymer D', the hydrogenated block copolymer D' being obtained by hydrogenating 90% or more of the unsaturated bonds of a block copolymer C' that comprises at least two polymer blocks A' and at least one polymer block B', the polymer block A' comprising a repeating unit derived from an aromatic vinyl compound as the main component, the polymer block B' comprising a repeating unit derived from a linear conjugated diene compound as the main component, and a ratio (wA' :wB') of the total weight fraction wA' of the polymer block A' in the block copolymer C' to the total weight fraction wB' of the polymer block B' in the block copolymer C' being 40:60 to 80:20, and,
   wherein the resin composition E comprises the UV absorber in a ratio of 1.0 to 10.0 parts by weight based on 100 parts by weight of the hydrogenated block copolymer D, and
   wherein the resin composition E' comprises the UV absorber in a ratio of 0 parts by weight or more and less than 1.0 part by weight based on 100 parts by weight of the modified hydrogenated block copolymer D".
(2) A method for producing the multilayer film according to (1), the method comprising producing the multilayer film using a melt extrusion method so that the layer F' comes in contact with the surface of a casting roll.

### ADVANTAGEOUS EFFECTS OF INVENTION

The aspects of the invention thus provide a multilayer film that is formed of a specific hydrogenated block copolymer, exhibits excellent UV-blocking properties and excellent mechanical strength, has excellent surface properties (i.e., rarely shows surface roughness), and is suitable as an optical film, and a method for producing the same.

### DESCRIPTION OF EMBODIMENTS

A multilayer film and a method for producing a multilayer film according to the exemplary embodiments of the invention are described in detail below.

### 1) Multilayer film

A multilayer film according to one embodiment of the invention comprises a film F, and a layer F' that is stacked on one side or each side of the film F, the film F being formed of a resin composition E that comprises a hydrogenated block copolymer D (described below), and a UV absorber, and the layer F' being formed of a resin composition E' that comprises a modified hydrogenated block copolymer D", and a UV absorber, the modified hydrogenated block copolymer D" being obtained by introducing an alkoxysilyl group into the hydrogenated block copolymer D',
wherein the resin composition E comprises the UV absorber in a ratio of 1.0 to 10.0 parts by weight based on 100 parts by weight of the hydrogenated block copolymer D, and
wherein the resin composition E' comprises the UV absorber in a ratio of 0 parts by weight or more and less than 1.0 part by weight based on 100 parts by weight of the modified hydrogenated block copolymer D".

### 1. Hydrogenated block copolymer D

The hydrogenated block copolymer D is obtained by hydrogenating 90% or more of the unsaturated bonds of a block copolymer C that comprises at least two polymer blocks A and at least one polymer block B, the polymer block A comprising a repeating unit derived from an aromatic vinyl compound as the main component, the polymer block B comprising a repeating unit derived from a linear conjugated diene compound as the main component, and the ratio (wA:wB) of the total weight fraction wA of the polymer block A in the block copolymer C to the total weight fraction wB of the polymer block B in the block copolymer C being 40:60 to 90:10.

### (1) Block copolymer C

The block copolymer C is a precursor for producing the hydrogenated block copolymer D used in connection with one embodiment of the invention, and comprises at least two polymer blocks A and at least one polymer block B.

The polymer block A comprise a repeating unit (also referred to as "structural unit" (hereinafter the same)) derived from an aromatic vinyl compound as the main component. The content of the repeating unit derived from an aromatic vinyl compound in the polymer block A is normally 90 wt% or more, preferably 95 wt% or more, and more preferably 99 wt% or more.

The polymer block A may include a repeating unit other than the repeating unit derived from an aromatic vinyl compound. The polymer block A may include either or both of a repeating unit derived from a linear conjugated diene and a repeating unit derived from an additional vinyl compound as a component other than the repeating unit derived from an aromatic vinyl compound. The content of a repeating unit other than the repeating unit derived from an aromatic vinyl compound in the polymer block A is normally 10 wt% or less, preferably 5 wt% or less, and more preferably 1 wt% or less. When the content of the repeating unit derived from an aromatic vinyl compound in the polymer block A is within the above range, the resulting multilayer film exhibits high heat resistance.

A plurality of polymer blocks A may be either identical to or different from each other as long as the above range is satisfied.

The polymer block B comprise a repeating unit derived from a linear conjugated diene compound as the main component. The content of the repeating unit derived from a linear conjugated diene compound in the polymer block B is normally 90 wt% or more, preferably 95 wt% or more, and more preferably 99 wt% or more.

The polymer block B may include a repeating unit other than the repeating unit derived from a linear conjugated diene compound. The polymer block B may include either or both of a repeating unit derived from an aromatic vinyl compound and a repeating unit derived from an additional vinyl compound as a component other than the repeating unit derived from a linear conjugated diene compound. The content of a repeating unit other than the repeating unit derived from a linear conjugated diene compound in the polymer block B is normally 10 wt% or less, preferably 5 wt% or less, and more preferably 1 wt% or less. When the content of the repeating unit derived from a linear conjugated diene compound is within the above range, the resulting multilayer film exhibits excellent flexibility. If the content of a repeating unit derived from an aromatic vinyl compound in the polymer block B is too high, the resulting multilayer film exhibits low birefringence, but tends to exhibit low flexibility at a low temperature.

When the block copolymer C includes a plurality of polymer blocks B, the plurality of polymer blocks B may be either identical to or different from each other as long as the above range is satisfied.

Examples of the aromatic vinyl compound include styrene; a styrene derivative that is substituted with an alkyl group, such as α-methyl styrene, 2-methylstyrene, 3-methylstyrene, 4-methylstyrene, 2,4-diisopropylstyrene, 2,4-dimethylstyrene, 4-t-butylstyrene, and 5-t-butyl-2-methylstyrene; a styrene derivative that is substituted with a halogen atom, such as 4-monochlorostyrene, dichlorostyrene, and 4-monofluorostyrene; a styrene derivative that is substituted with an alkoxy group, such as 4-methoxystyrene and 3,5-dimethoxystyrene; a styrene derivative that is substituted with an aryl group, such as 4-phenylstyrene; and the like. Among these, an aromatic vinyl compound that does not include a polar group is preferable from the viewpoint of hygroscopicity, and styrene is particularly preferable from the viewpoint of industrial availability.

It is preferable that the linear conjugated diene compound does not include a polar group from the viewpoint of hygroscopicity. Examples of the linear conjugated diene compound include 1,3-butadiene, isoprene, 2,3-dimethyl-1,3-butadiene, 1,3-pentadiene, and the like. Among these, 1,3-butadiene and isoprene are particularly preferable from the viewpoint of industrial availability.

Examples of the additional vinyl compound include a linear olefin, a cycloolefin, a linear vinyl compound, a cyclic vinyl compound, an unsaturated cyclic acid anhydride, an unsaturated imide compound, and the like. These vinyl compounds may be substituted with a nitrile group, an alkoxycarbonyl group, a carboxyl group, or a halogen atom. Among these, a vinyl compound that does not include a polar group is preferable from the viewpoint of hygroscopicity, and a linear olefin and a cycloolefin are more preferable. Specific examples of the additional vinyl compound include a linear olefin such as ethylene, propylene, 1-butene, 1-pentene, 1-hexene, 1-heptene, 1-octene, 1-nonene, 1-decene, 1-dodecene, 1-eicosene, 4-methyl-1-pentene, and 4,6-dimethyl-1-heptene; a cycloolefin such as vinylcyclohexane; and the like. Among these, a linear olefin is still more preferable, and ethylene and propylene are particularly preferable.

The number of polymer blocks A included in the block copolymer C is normally 5 or less, preferably 4 or less, and more preferably 3 or less. The number of polymer blocks B included in the block copolymer C is normally 4 or less, preferably 3 or less, and more preferably 2 or less.

When the block copolymer C includes either or both of a plurality of polymer blocks A and a plurality of polymer blocks B, the ratio (Mw(A1)/Mw(A2)) of the weight average molecular weight Mw(A1) of the polymer block among the plurality of polymer blocks A that has the highest weight average molecular weight to the weight average molecular weight Mw(A2) of the polymer block among the plurality of polymer blocks A that has the lowest weight average molecular weight, and the ratio (Mw(B1)/Mw(B2)) of the weight average molecular weight Mw(B1) of the polymer block among the plurality of polymer blocks B that has the highest weight average molecular weight to the weight average molecular weight Mw(B2) of the polymer block among the plurality of polymer blocks B that has the lowest weight average molecular weight, are 2.0 or less, preferably 1.5 or less, and more preferably 1.2 or less.

When the ratio "Mw(A1)/Mw(A2)" exceeds 2 (i.e., the degree of asymmetry increases), the modulus of elasticity of the hydrogenated block copolymer D increases, and the high-temperature-side glass transition temperature increases (upper limit: 140°C). In this case, however, deterioration in mechanical strength may occur, and the intermediate layer may easily break when forming a film.

When the content of the polymer block B is lower than the content of the polymer block A, and the ratio "Mw(B1)/Mw(B2)" is large, the molecular weight of the polymer block B2 may be too low, and phase separation with respect to the polymer block A may occur to only a small extent. For example, even a pentablock polymer may show the same viscoelastic behavior as that of a triblock polymer. Moreover, the high-temperature-side glass transition temperature may decrease, and deterioration in heat resistance may occur.

The block copolymer C may be a linear block copolymer or a radial block copolymer. It is preferable that the block copolymer C be a linear block copolymer since excellent mechanical strength can be obtained. It is most preferable that the block copolymer C be a triblock copolymer (A-B-A) in which the polymer block A is bonded to each end of the polymer block B, or a pentablock copolymer (A-B-A-B-A) in which the polymer block B is bonded to each end of the polymer block A, and an additional polymer block A is bonded to the other end of each polymer block B.

The ratio (wA:wB) of the total weight fraction wA of the polymer block A in the block copolymer C to the total weight fraction wB of the polymer block B in the block copolymer C is 40:60 to 90:10, preferably 50:50 to 85:15, and more preferably 60:40 to 80:20. If the total weight fraction wA is too high, the heat resistance of the hydrogenated block copolymer D used in connection with one embodiment of the invention increases, and the retardation of the extruded film decreases, but a decrease in flexibility may occur, and the resulting film may break at the cutting surface. If the total weight fraction wA is too low, the resulting film may exhibit insufficient heat resistance when used as an optical film.

The polystyrene-equivalent weight average molecular weight (Mw) of the block copolymer C determined by gel permeation chromatography (GPC) (eluent: tetrahydrofuran (THF)) is normally 30,000 to 200,000, preferably 40,000 to 150,000, and more preferably 50,000 to 100,000. The molecular weight distribution (Mw/Mn) of the block copolymer C is preferably 3 or less, more preferably 2 or less, and particularly preferably 1.5 or less.

If the weight average molecular weight (Mw) of the block copolymer C is less than 30,000, the resulting hydrogenated block copolymer D may exhibit poor mechanical strength, and the resulting film may easily break. If the weight average molecular weight (Mw) of the block copolymer C exceeds 200,000, the resulting hydrogenated block copolymer D may have high melt viscosity, and it may be difficult to implement a melt forming process at a forming temperature of 250°C or less at which the hydrogenated block copolymer D is thermally decomposed to only a small extent. If the weight average molecular weight (Mw) of the block copolymer C exceeds 200,000, the time required for the hydrogenation reaction may increase (i.e., it may be industrially disadvantageous).

The block copolymer C may be produced using a method that alternately polymerizes a monomer mixture (a) that includes the aromatic vinyl compound as the main component, and a monomer mixture (b) that includes the linear conjugated diene compound as the main component, through living anionic polymerization or the like; or a method that sequentially polymerizes a monomer mixture (a) that includes the aromatic vinyl compound as the main component, and a monomer mixture (b) that includes the linear conjugated diene compound as the main component, and couples the terminals of the resulting polymer block B using a coupling agent, for example.

The monomer mixture (a) normally includes the aromatic vinyl compound in a ratio of 90 wt% or more, preferably 95 wt% or more, and more preferably 99 wt% or more, and normally includes a monomer component other than the aromatic vinyl compound in a ratio of 10 wt% or less, preferably 5 wt% or less, and more preferably 1 wt% or less.

The monomer mixture (b) normally includes the linear conjugated diene compound in a ratio of 90 wt% or more, preferably 95 wt% or more, and more preferably 99 wt% or more, and normally includes a monomer component other than the linear conjugated diene compound in a ratio of 10 wt% or less, preferably 5 wt% or less, and more preferably 1 wt% or less.

### (2) Hydrogenated block copolymer D

The hydrogenated block copolymer D used in connection with one embodiment of the invention is obtained by hydrogenating the carbon-carbon unsaturated bonds of the main chain, the side chain, and the aromatic ring of the block copolymer C. The hydrogenation rate of the hydrogenated block copolymer D is normally 90% or more, preferably 97% or more, and more preferably 99% or more. The resulting film exhibits better light resistance and heat resistance as the hydrogenation rate increases. The hydrogenation rate of the hydrogenated block copolymer D may be determined by ¹H-NMR analysis.

The unsaturated bond hydrogenation method, the reaction configuration, and the like are not particularly limited. It is preferable to use a hydrogenation method that can increase the hydrogenation rate, and causes a polymer chain cleavage reaction to only a small extent. Examples of such a hydrogenation method include the method disclosed in WO2011/096389, the method disclosed in WO2012/043708, and the like.

The hydrogenated block copolymer D obtained as described above may be collected from the reaction solution including the hydrogenated block copolymer D after removing either or both of a hydrogenation catalyst and a polymerization catalyst from the reaction solution. The hydrogenated block copolymer D thus collected is normally pelletized, and subjected to the subsequent film-forming process, for example.

The polystyrene-equivalent weight average molecular weight (Mw) of the hydrogenated block copolymer D determined by GPC using THF as a solvent is normally 35,000 to 200,000, preferably 40,000 to 150,000, and more preferably 45,000 to 100,000.

The molecular weight distribution (Mw/Mn) of the hydrogenated block copolymer D is preferably 3 or less, more preferably 2 or less, and particularly preferably 1.5 or less. When the weight average molecular weight (Mw) and the molecular weight distribution (Mw/Mn) of the hydrogenated block copolymer D are within the above ranges, the heat resistance and the mechanical strength of the resulting film are maintained.

### 2. Resin composition E

The resin composition E used in connection with one embodiment of the invention includes the hydrogenated block copolymer D, and the UV absorber (normally) in a ratio of 1.0 to 10.0 parts by weight, preferably 2.0 to 9.0 parts by weight, and more preferably 3.0 to 8.0 parts by weight, based on 100 parts by weight of the hydrogenated block copolymer D.

When the resin composition E includes the UV absorber in a ratio within the above range, the resulting optical film can efficiently cut UV rays, but maintains transparency in the visible region (i.e., deterioration in color tone does not occur). If the resin composition E includes the UV absorber in a ratio of less than the lower limit of the above range, the light transmittance at a wavelength of about 380 nm may increase, and the degree of polarization of a polarizer may decrease when the film according to one embodiment of the invention is used as a polarizer protective film. If the resin composition E includes the UV absorber in a ratio of more than the upper limit of the above range, the short-wavelength-side light transmittance may decrease, and the yellowness of the film may increase to a large extent.

It is preferable that the resin composition E have a light transmittance at a wavelength of 380 nm of 8% or less, more preferably 4% or less, and particularly preferably 1% or less, from the viewpoint of UV-blocking properties.

Examples of the UV absorber used in connection with one embodiment of the invention include a benzophenone-based UV absorber such as 2,4-dihydroxybenzophenone, 2-hydroxy-4-methoxybenzophenone, 2-hydroxy-4-methoxybenzophenone-5-sulfonic acid trihydrate, 2-hydroxy-4-octyloxybenzophenone, 4-dodecaoxy-2-hydroxybenzophenone, 4-benzyloxy-2-hydroxybenzophenone, 2,2',4,4'-tetrahydroxybenzophenone, and 2,2'-dihydroxy-4,4'-dimethoxybenzophenone; a salicylate-based UV absorber such as phenyl salicylate, 4-t-butylphenyl-2-hydroxybenzoate, phenyl-2-hydroxybenzoate, 2,4-di-t-butylphenyl-3,5-di-t-butyl-4-hydroxybenzoate, and hexadecyl-3,5-di-t-butyl-4-hydroxybenzoate; a benzotriazole-based UV absorber such as 2-(2-hydroxy-5-methylphenyl)-2H-benzotriazole, 2-(3-t-butyl-2-hydroxy-5-methylphenyl)-5-chloro-2H-benzotriazole, 2-(3,5-di-t-butyl-2-hydroxyphenyl)-5-chloro-2H-benzotriazole, 2-(3,5-di-t-butyl-2-hydroxyphenyl)-2H-benzotriazole, 2-(3,5-dicumyl-2-hydroxyphenyl)-2H-benzotriazole, 5-chloro-2-(3,5-di-t-butyl-2-hydroxyphenyl)-2H-benzotriazole, 2-(3,5-di-t-amyl-2-hydroxyphenyl)-2H-benzotriazole, 2-(2-hydroxy-5-t-octylphenyl)-2H-benzotriazole, 2-(2-hydroxy-4-octylphenyl)-2H-benzotriazole, 2-(2H-benzotriazol-2-yl)-4-methyl-6-(3,4,5,6-tetrahydrophthalimidylmethyl)phenol, and 2,2'-methylenebis[4-(1,1,3,3-tetramethylbutyl)-6-[(2H-benzotriazol-2-yl)phenol]]; a triazine-based UV absorber such as 2-[4,6-bis(2,4-dimethylphenyl)-1,3,5 -triazin-2-yl] -5 -(octyloxy)phenol and 2,4-bis[2-hydroxy-4-butoxyphenyl]-6-(2,4-dibutoxyphenyl)-1,3,5-triazine; and the like.

Among these, 2-(3-t-butyl-2-hydroxy-5-methylphenyl)-5-chloro-2H-benzotriazole, 2,2'-methylenebis[4-(1,1,3,3-tetramethylbutyl)-6-[(2H-benzotriazol-2-yl)phenol]], and the like are preferable due to excellent UV absorption at a wavelength of around 380 nm.

The resin composition E may include an additional additive other than the UV absorber. Examples of the additional additive include a light stabilizer, an antioxidant, an anti-blocking agent, and the like. These additional additives may be used either alone or in combination.

A hindered amine-based light stabilizer is preferable as the light stabilizer. Examples of the hindered amine-based light stabilizer include a compound that includes a 3,5-di-t-butyl-4-hydroxyphenyl group in the molecular structure, a compound that includes a 2,2,6,6-tetramethylpiperidyl group in the molecular structure, a compound that includes a 1,2,2,6,6-pentamethyl-4-piperidyl group in the molecular structure, and the like.

Examples of the antioxidant include a phosphorus-based antioxidant, a phenol-based antioxidant, a sulfur-based antioxidant, and the like. The antioxidant is normally used in a ratio of 0.01 to 1 part by weight, preferably 0.05 to 0.9 parts by weight, and more preferably 0.1 to 0.8 parts by weight, based on 100 parts by weight of the hydrogenated block copolymer D. When the antioxidant is used in a ratio within the above range, the resin composition E exhibits excellent thermal stability (heat resistance).

Specific examples of the antioxidant include pentaerythrityl tetrakis[3-(3,5-di-t-butyl-4-hydroxyphenyl)propionate, 2,2-thiodiethylene bis[3-(3,5-di-t-butyl-4-hydroxyphenyl)propionate, octadecyl-3-(3,5-di-t-butyl-4-hydroxyphenyl)propionate, 3,9-bis{2-[3-(3-t-butyl-4-hydroxy-5-methylphenyl)propionyloxy-1,1-dimethylethyl}-2,4,8,10-tetraoxaspiro[5,5undecane, 1,3,5-trimethyl-2,4,6-tris(3,5-di-t-butyl-4-hydroxybenzyl)benzene, and the like.

The UV absorber and the additional additive may be mixed with the hydrogenated block copolymer D using a method that mixes the UV absorber and the additional additive with the hydrogenated block copolymer D, and homogenously kneads the mixture using a twin-screw kneader, a roll, a Brabender, an extruder, or the like in a state in which the hydrogenated block copolymer D is melted.

### 3. Hydrogenated block copolymer D'

The hydrogenated block copolymer D' is obtained by hydrogenating 90% or more of the unsaturated bonds of a block copolymer C' that includes at least two polymer blocks A' and at least one polymer block B', the polymer block A' including a repeating unit derived from an aromatic vinyl compound as the main component, the polymer block B' including a repeating unit derived from a linear conjugated diene compound as the main component, and the ratio (wA' :wB') of the total weight fraction wA' of the polymer block A' in the block copolymer C' to the total weight fraction wB' of the polymer block B' in the block copolymer C' being 40:60 to 80:20.

The details of the repeating units included in the polymer block A' and the polymer block B' are the same as described above in connection with the polymer block A and the polymer block B.

The hydrogenated block copolymer D' is obtained by hydrogenating the block copolymer C' in the same manner as described above in connection with the block copolymer C. The hydrogenation rate of the hydrogenated block copolymer D' is normally 90% or more, preferably 97% or more, and more preferably 99% or more. The resulting film exhibits better light resistance and heat resistance as the hydrogenation rate increases.

The molecular weight of the hydrogenated block copolymer D' may be approximately the same as that of the hydrogenated block copolymer D.

The hydrogenated block copolymer D' used in connection with one embodiment of the invention is produced using the block copolymer C' (i.e., precursor) that is characterized in that the ratio (wA' :wB') of the total weight fraction wA' of the polymer block A' in the block copolymer C' to the total weight fraction wB' of the polymer block B' in the block copolymer C' is 40:60 to 80:20, preferably 45:55 to 70:30, and more preferably 50:50 to 60:40. When the total weight fraction wA' is within the above range, a film obtained by forming the hydrogenated block copolymer D' that is obtained by hydrogenating the block copolymer C' exhibits excellent flexibility and excellent mechanical strength.

### 4. Modified hydrogenated block copolymer D"

The modified hydrogenated block copolymer D" is obtained by introducing an alkoxysilyl group into the hydrogenated block copolymer D'.

The modified hydrogenated block copolymer D" may be obtained using a method that reacts the hydrogenated block copolymer D' with an ethylenically unsaturated silane compound in the presence of an organic peroxide to introduce an alkoxysilyl group into the hydrogenated block copolymer D'; a method that hydrogenates a block copolymer obtained by copolymerizing an ethylenically unsaturated silane compound with either or both of an aromatic vinyl compound and a linear conjugated diene compound; or the like.

The alkoxysilyl group may be bonded to the hydrogenated block copolymer D' through a divalent organic group (e.g., alkylene group or alkyleneoxycarbonylalkylene group).

The alkoxysilyl group is normally introduced in a ratio of 0.1 to 10 parts by weight, preferably 0.2 to 5 parts by weight, and more preferably 0.3 to 3 parts by weight, based on 100 parts by weight of the modified hydrogenated block copolymer D". If the alkoxysilyl group is introduced in too large a ratio, the alkoxysilyl groups that have been decomposed due to a trace amount of water or the like may be crosslinked to a large extent (before melt-forming the resin composition to have the desired shape), whereby gelation may occur, or a decrease in formability may occur due to a decrease in melt flowability, for example. If the alkoxysilyl group is introduced in too small a ratio, it may be difficult to obtain sufficient adhesion to a polyvinyl alcohol-based film and glass. The introduction of the alkoxysilyl group can be determined from the IR spectrum. The amount of alkoxysilyl group introduced can be calculated from the ¹H-NMR spectrum. Note that the number of integrations is increased when the amount of alkoxysilyl group introduced is small.

The ethylenically unsaturated silane compound is not particularly limited as long as the ethylenically unsaturated silane compound undergoes copolymerization with the aromatic vinyl compound or the linear conjugated diene compound, or undergoes graft polymerization with the hydrogenated block copolymer D' to introduce the alkoxysilyl group into the hydrogenated block copolymer D. Specific examples of the ethylenically unsaturated silane compound include a vinyltrialkoxysilane such as vinyltrimethoxysilane and vinyltriethoxysilane; an allyltrialkoxysilane such as allyltrimethoxysilane and allyltriethoxysilane; an alkyldialkoxysilane such as dimethoxymethylvinylsilane and diethoxymethylvinylsilane; a styryltrialkoxysilane such as p-styryltrimethoxysilane; a (meth)acryloxytrialkoxysilane such as 3-methacryloxypropylmethyldimethoxysilane, 3-methacryloxypropyltrimethoxysilane, and 3-acryloxypropyltrimethoxysilane; and the like. These ethylenically unsaturated silane compounds may be used either alone or in combination.

When using the method that reacts the hydrogenated block copolymer D' with the ethylenically unsaturated silane compound in the presence of an organic peroxide to introduce the alkoxysilyl group into the hydrogenated block copolymer D', the ethylenically unsaturated silane compound is normally used in a ratio of 0.1 to 10 parts by weight, preferably 0.2 to 5 parts by weight, and more preferably 0.3 to 3 parts by weight, based on 100 parts by weight of the hydrogenated block copolymer D'.

A peroxide having a one-minute half-life temperature of 170 to 190°C is preferably used as the peroxide. For example, t-butylcumyl peroxide, dicumyl peroxide, di-t-hexyl peroxide, 2,5-dimethyl-2,5-di(t-butylperoxy)hexane, di-t-butyl peroxide, di-(2-t-butylperoxyisopropyl)benzene, or the like is preferably used as the peroxide.

These peroxides may be used either alone or in combination.

The peroxide is normally used in a ratio of 0.05 to 2 parts by weight, preferably 0.1 to 1 part by weight, and more preferably 0.2 to 0.5 parts by weight, based on 100 parts by weight of the hydrogenated block copolymer D'.

The hydrogenated block copolymer D' and the ethylenically unsaturated silane compound may be reacted in the presence of the peroxide in an arbitrary way. For example, the alkoxysilyl group can be introduced by kneading the mixture at the desired temperature for the desired time using a twin-screw kneader.

The kneading temperature is normally set to 180 to 220°C, preferably 185 to 210°C, and more preferably 190 to 200°C. The heating/kneading time is normally set to about 0.1 to 10 minutes, preferably about 0.2 to 5 minutes, and more preferably about 0.3 to 2 minutes. The mixture may be continuously kneaded and extruded so that the temperature and the residence time fall within the above ranges.

The molecular weight of the modified hydrogenated block copolymer D" is substantially identical to that of the hydrogenated block copolymer D' used as the raw material since the amount of alkoxysilyl group introduced into the hydrogenated block copolymer D' is small. However, since the hydrogenated block copolymer D' is reacted with the ethylenically unsaturated silane compound in the presence of the peroxide, the polymer also undergoes a crosslinking reaction and a cleavage reaction, and the molecular weight distribution of the hydrogenated block copolymer increases.

The polystyrene-equivalent weight average molecular weight (Mw) of the modified hydrogenated block copolymer D" determined by GPC using THF as a solvent is normally 30,000 to 300,000, preferably 40,000 to 200,000, and more preferably 50,000 to 150,000. The molecular weight distribution (Mw/Mn) of the modified hydrogenated block copolymer D" is preferably 3.5 or less, more preferably 2.5 or less, and particularly preferably 2.0 or less. When the weight average molecular weight (Mw) and the molecular weight distribution (Mw/Mn) of the modified hydrogenated block copolymer D" are within the above ranges, the mechanical strength of the multilayer film according to one embodiment of the invention is maintained.

### 5. Resin composition E'

The modified hydrogenated block copolymer D" used in connection with one embodiment of the invention are mixed with an additive (e.g., UV absorber, light stabilizer, and antioxidant), and used as the resin composition E'.

The resin composition E' includes the UV absorber in a ratio of less than 1.0 parts by weight based on 100 parts by weight of the modified hydrogenated block copolymer D".

When the resin composition E' includes the UV absorber, the UV absorber is normally used in a ratio of 0.01 parts by weight to less than 1.0 part by weight, preferably 0.05 to 0.6 parts by weight, and more preferably 0.1 to 0.4 parts by weight.

Examples of the UV absorber include those mentioned above in connection with the UV absorber that is mixed with the hydrogenated block copolymer D. If the UV absorber is used in a ratio of 1.0 part by weight or more, a casting roll may be easily contaminated when the multilayer film according to one embodiment of the invention is continuously produced for a long time by extrusion using an extruder.

The resin composition E' may include an additive other than the UV absorber. Examples of the additive other than the UV absorber include a light stabilizer, an antioxidant, an anti-blocking agent, and the like (as described above in connection with the hydrogenated block copolymer D). These additives may be used either alone or in combination.

When producing the multilayer film according to one embodiment of the invention using an extrusion method, it is desirable to add an antioxidant in order to prevent a situation in which gum adheres to the T-die.

Examples of the antioxidant include a phosphorus-based antioxidant, a phenol-based antioxidant, a sulfur-based antioxidant, and the like. The antioxidant is normally used in a ratio of 0.1 to 1 part by weight, preferably 0.2 to 0.9 parts by weight, and more preferably 0.3 to 0.8 parts by weight, based on 100 parts by weight of the modified hydrogenated block copolymer D". When the antioxidant is used in a ratio within the above range, it is possible to reduce or suppress a situation in which gum adheres to the T-die when the multilayer film according to one embodiment of the invention is continuously produced for a long time by extrusion.

The UV absorber and the additional additive may be mixed with the modified hydrogenated block copolymer D" in the same manner as described above in connection with hydrogenated block copolymer D.

When the layer formed of the resin composition E' is stacked on the surface of the film formed of the hydrogenated block copolymer D, it is possible to obtain high adhesion to a polyvinyl alcohol-based film that forms a polarizer, glass that is used as a liquid crystal display substrate, and the like (as described later).

### 6. Multilayer film

The multilayer film according to one embodiment of the invention has a configuration in which the layer F' formed of the resin composition E' is stacked on one side or each side of the film F formed of the resin composition E.

The film F formed of the resin composition E is a layer that blocks UV rays. The thickness of the film F is normally 10 to 200 µm, preferably 15 to 150 µm, and more preferably 20 to 100 µm. When the thickness of the film F is 10 µm or more, the UV-blocking properties are improved when the multilayer film is used as a polarizer protective film, for example. Moreover, it is possible to improve the handling capability (e.g., prevent breakage of a polarizing film). When the thickness of the film F is 200 µm or less, it is possible to reduce the thickness of the entire polarizing film.

The layer F' formed of the resin composition E' is stacked on one side or each side of the film F, and improves the mechanical strength and the flexibility of the multilayer film. When the multilayer film is produced by extrusion so that the layer F' comes in contact with a casting roll, it is possible to prevent the contamination of the casting roll, and obtain a multilayer film that has excellent surface properties (i.e., rarely shows surface roughness) and is suitable as an optical film.

The thickness of the layer F' is normally 1 to 50 µm, preferably 2 to 30 µm, and more preferably 3 to 20 µm. When the thickness of the layer F' is 1 µm or more, it is possible to improve the flexibility of the multilayer film. If the thickness of the layer F' exceeds 50 µm, the in-plane retardation of the multilayer film may increase to a large extent. Moreover, the thickness of the multilayer film may also increase to a large extent.

When using the multilayer film according to one embodiment of the invention as a polarizer protective film for a polarizing film, the in-plane retardation (Re) of the multilayer film is preferably 10 nm or less, and more preferably 3 nm or less. When the in-plane retardation Re of the multilayer film is 10 nm or less, it is possible to reduce or suppress the occurrence of color non-uniformity when the multilayer film is incorporated in a liquid crystal display unit. There is a tendency that a large-screen liquid crystal display device shows significant color non-uniformity. The multilayer film according to one embodiment of the invention is also suitable for such a large-screen display device.

The in-plane retardation (Re) is calculated using the expression "Re=(Nx-Ny)×d" (where, Nx and Ny are the in-plane principal refractive indices, and d is the thickness of the film). The in-plane retardation (Re) may be measured using a commercially-available automatic birefringence meter.

Since the multilayer film according to one embodiment of the invention exhibits excellent UV-blocking properties, the multilayer film according to one embodiment of the invention may be used as a roof material, a ceiling material, a wall material,
a window material, and the like used in the fields of automobiles, buildings, plastic greenhouses, and the like; a protective film used for a drug, food, and drinking water; a member used for a liquid crystal display device and the like, such as a polarizer protective film for a polarizing film, a brightness enhancement film, a transparent conductive film, a touch panel substrate, a liquid crystal substrate, a diffuser sheet, and a prism sheet; a UV-blocking article that is stacked on the surfaces of a glass sheet, a transparent plastic sheet, or the like, or interposed between a plurality of glass sheets, transparent plastic sheets, or the like; and the like.

### 2) Method for producing multilayer film

A method for producing a multilayer film (hereinafter may be referred to as "production method") according to one embodiment of the invention that produces the multilayer film according to one embodiment of the invention includes melt-extruding the resin composition E' so as to come in contact with the surface of a casting roll. The layer F' can be formed by melt-extruding the resin composition E' so as to come in contact with the surface of a casting roll. The production method according to one embodiment of the invention can continuously produce the multilayer film according to one embodiment of the invention for a long time while ensuring that the multilayer film rarely shows surface roughness, and has excellent surface properties.

The forming method applied to the method for producing a multilayer film according to one embodiment of the invention is not particularly limited. A known two-material/three-layer multilayer coextrusion method, an extrusion lamination forming method that melt-extrudes the resin composition E onto a film formed of the resin composition E' using a melt extrusion method or the like to obtain a two-material/three-layer or two-material/two-layer multilayer film, or the like may be used when implementing the method for producing a multilayer film according to one embodiment of the invention.

In either case, the resin composition is extruded so that the layer F' formed of the resin composition E' comes in contact with the casting roll, and the layer formed of the resin composition E does not come in contact with the casting roll.

The sheet-forming conditions are appropriately selected taking account of the forming method. For example, when a melt extrusion method is used, the resin temperature is normally (appropriately) selected within the range from 180 to 250°C, preferably from 190 to 240°C, and more preferably from 200 to 230°C. If the resin temperature is too low, deterioration in fluidity may occur, and the surface flatness-smoothness of the resulting multilayer sheet may deteriorate. Moreover, it may be difficult to increase the sheet extrusion speed, and the industrial productivity may deteriorate. If the resin temperature is too high, the hydrogenated block copolymers D and the modified hydrogenated block copolymer D" may have a problem in terms of thermal stability, and the mechanical strength of the resulting multilayer film may deteriorate.

It is preferable to melt the hydrogenated block copolymers D and the modified hydrogenated block copolymer D" in an extruder, and pass the molten resin through a gear pump or a filter before extruding the molten resin from a die provided to the extruder. A uniform amount of resin can be extruded, and a variation in thickness can be reduced by utilizing a gear pump.

Foreign matter can be removed from the resin by utilizing a filter, and a multilayer film that has no defects, has an excellent external appearance, and is suitable for optical applications can be obtained.

### EXAMPLES

The invention is further described below by way of examples. Note that the invention is not limited to the following examples. Note that the units "parts" and "%" respectively refer to "parts by weight" and "wt%" unless otherwise indicated.

The measurement methods and the evaluation methods used in connection with the examples are described below.

### (1) Weight average molecular weight (Mw) and molecular weight distribution (Mw/Mn)

The molecular weight of the block copolymer and the hydrogenated block copolymer was determined by GPC (temperature: 38°C, eluent: THF) as a standard polystyrene-equivalent value. An HLC-8020 GPC system (manufactured by Tosoh Corporation) was used as the measurement device.

### (2) Hydrogenation rate

The hydrogenation rate of the main chain, the side chain, and the aromatic ring of the hydrogenated block copolymer was calculated from the ¹H-NMR spectrum.

### (3) Surface properties of film

The external appearance of the surface of the extruded film was observed with the naked eye. A case where no cloudiness was observed from the reflected light from the surface of the film was evaluated as "Good", and a case where cloudiness was observed was evaluated as "Bad".

### (4) In-plane retardation (Re) of film

The birefringence of the extruded film was measured over 1,000 mm (at intervals of 50 mm in the width direction) using a birefringence meter ("KOBRA-21ADH" manufactured by Oji Scientific Instruments Co., Ltd.). The measurement results were averaged, and the resulting average value was taken as the in-plane retardation (Re) of the laminate film.

### (5) UV-blocking properties

The light transmittance of the film at a wavelength of 380 nm and 300 nm was measured using a UV spectrophotometer ("V-570" manufactured by JASCO Corporation).

### (6) Mechanical strength

The tensile properties of the film were measured using an autograph ("AGS-10KNX" manufactured by Shimadzu Corporation). A case where the elongation at break was 6% or more was evaluated as "Good", a case where the elongation at break was 3% or more and less than 6% was evaluated as "Fair", and a case where the elongation at break was less than 3% was evaluated as "Bad".

### Reference Example 1

### Production of hydrogenated block copolymer D1

### Production of block copolymer C1

A reactor equipped with a stirrer in which the internal atmosphere had been sufficiently replaced with nitrogen, was charged with 550 parts of dehydrated cyclohexane, 37.5 parts of dehydrated styrene, and 0.475 parts of n-dibutyl ether. 0.72 parts of a 15% solution of n-butyllithium in cyclohexane was added to the mixture while stirring the mixture at 60°C to initiate polymerization. After the addition of the solution of n-butyllithium, the mixture was stirred at 60°C for 60 minutes. The polymerization conversion rate determined by gas chromatography was 99.5%.

After the addition of 25.0 parts of dehydrated isoprene to the reaction mixture, the resulting mixture was stirred for 30 minutes. The polymerization conversion rate was 99.5%.

After the addition of 37.5 parts of dehydrated styrene, the resulting mixture was stirred for 60 minutes. The polymerization conversion rate was about 100%.

0.5 parts of isopropyl alcohol was added to the reaction mixture to terminate the reaction. A block copolymer C1 included in the resulting polymer solution had a weight average molecular weight (Mw) of 60,300 and a molecular weight distribution (Mw/Mn) of 1.05, and the ratio "wA:wB" was 75:25.

### Production of hydrogenated block copolymer D1

The polymer solution obtained as described above was transferred to a pressure-resistant reactor equipped with a stirrer. After the addition of 8.0 parts of a nickel catalyst supported on diatomaceous earth ("E22U" manufactured by JGC Catalysts and Chemicals Ltd., nickel content (amount of nickel supported): 60%) (hydrogenation catalyst) and 100 parts of dehydrated cyclohexane, the mixture was mixed. After replacing the atmosphere inside the reactor with hydrogen gas, hydrogen was supplied to the reactor while stirring the solution to effect a hydrogenation reaction at 190°C for 6 hours under a pressure of 4.5 MPa. The resulting hydrogenated block copolymer D1 had a weight average molecular weight (Mw) of 63,800 and a molecular weight distribution (Mw/Mn) of 1.06.

After filtering the reaction solution to remove the hydrogenation catalyst, 1.0 part of a solution prepared by dissolving 0.1 parts of pentaerythrityl tetrakis[3-(3,5-di-t-butyl-4-hydroxyphenyl)propionate] ("Songnox 1010" manufactured by KOYO Chemical Research Center) (phenol-based antioxidant) in xylene was added to the reaction solution, and dissolved therein.

After filtering the solution through a metal fiber filter (manufactured by Nichidai Corporation, pore size: 0.4 µm) to remove fine solids, the solvent (cyclohexane and xylene) and other volatile components were removed from the solution at 260°C under a pressure of 0.001 MPa or less using a cylindrical evaporator ("Kontro" manufactured by Hitachi Ltd.). The molten polymer was filtered at 260°C using a polymer filter (manufactured by Fuji Filter Mfg. Co., Ltd.) provided with a stainless steel sintered filter (pore size: 5 µm) connected to the evaporator, extruded from a die in the shape of a strand, cooled, and cut using a pelletizer to obtain 96 parts of pellets of the hydrogenated block copolymer D1. The pellets of the hydrogenated block copolymer D1 had a weight average molecular weight (Mw) of 63,200 and a molecular weight distribution (Mw/Mn) of 1.11, and the hydrogenation rate was about 100%.

### Reference Example 2

### Production of hydrogenated block copolymer D2

### Production of block copolymer C2

A polymerization reaction was effected and terminated in the same manner as in Reference Example 1, except that 30.0 parts of styrene, 7.5 parts of isoprene, 25.0 parts of styrene, 7.5 parts of isoprene, and 30.0 parts of styrene were added sequentially. The resulting block copolymer C2 had a weight average molecular weight (Mw) of 61,600 and a molecular weight distribution (Mw/Mn) of 1.06, and the ratio "wA:wB" was 85:15.

### Production of hydrogenated block copolymer D2

The polymer solution obtained as described above was subjected to a hydrogenation reaction in the same manner as in Reference Example 1. The resulting hydrogenated block copolymer D2 had a weight average molecular weight (Mw) of 65,300 and a molecular weight distribution (Mw/Mn) of 1.07.

After completion of the hydrogenation reaction, an antioxidant was added to the reaction solution in the same manner as in Reference Example 1, followed by concentration and drying to obtain 92 parts of pellets of the hydrogenated block copolymer D2. The pellets of the hydrogenated block copolymer D2 had a weight average molecular weight (Mw) of 64,600 and a molecular weight distribution (Mw/Mn) of 1.12, and the hydrogenation rate was about 100%.

### Reference Example 3

### Production of hydrogenated block copolymer D'3

### Production of block copolymer C'3

A polymerization reaction was effected and terminated in the same manner as in Reference Example 1, except that 30.0 parts of styrene, 40.0 parts of isoprene, and 30.0 parts of styrene were added sequentially, and the 15% solution of n-butyllithium in cyclohexane was used in a ratio of 0.70 parts. The resulting block copolymer C'3 had a weight average molecular weight (Mw) of 60,200 and a molecular weight distribution (Mw/Mn) of 1.04, and the ratio "wA:wB" was 60:40.

### Production of hydrogenated block copolymer D'3

The polymer solution obtained as described above was subjected to a hydrogenation reaction in the same manner as in Reference Example 1. The resulting hydrogenated block copolymer D'3 had a weight average molecular weight (Mw) of 63,700 and a molecular weight distribution (Mw/Mn) of 1.05.

After completion of the hydrogenation reaction, an antioxidant was added to the reaction solution in the same manner as in Reference Example 1, followed by concentration and drying to obtain 95 parts of pellets of the hydrogenated block copolymer D'3. The pellets of the hydrogenated block copolymer D'3 had a weight average molecular weight (Mw) of 63,100 and a molecular weight distribution (Mw/Mn) of 1.12, and the hydrogenation rate was about 100%.

### Reference Example 4

### Production of hydrogenated block copolymer D'4

### Production of block copolymer C'4

A polymerization reaction was effected and terminated in the same manner as in Reference Example 1, except that 25.0 parts of styrene, 50.0 parts of isoprene, and 25.0 parts of styrene were added sequentially, and the 15% solution of n-butyllithium in cyclohexane was used in a ratio of 0.68 parts. The resulting block copolymer C'4 had a weight average molecular weight (Mw) of 61,100 and a molecular weight distribution (Mw/Mn) of 1.04, and the ratio "wA:wB" was 50:50.

### Production of hydrogenated block copolymer D'4

The polymer solution obtained as described above was subjected to a hydrogenation reaction in the same manner as in Reference Example 1. The resulting hydrogenated block copolymer D'4 had a weight average molecular weight (Mw) of 64,700 and a molecular weight distribution (Mw/Mn) of 1.05.

After completion of the hydrogenation reaction, an antioxidant was added to the reaction solution in the same manner as in Reference Example 1, followed by concentration and drying to obtain 92 parts of pellets of the hydrogenated block copolymer D'4. The pellets of the hydrogenated block copolymer D'4 had a weight average molecular weight (Mw) of 64,000 and a molecular weight distribution (Mw/Mn) of 1.12, and the hydrogenation rate was about 100%.

### Reference Example 5

### Production of modified hydrogenated block copolymer D"3

2.0 parts of vinyltrimethoxysilane and 0.2 parts of 2,5-dimethyl-2,5-di(t-butylperoxy)hexane ("PERHEXA (registered trademark) 25B" manufactured by NOF Corporation) were added to 100 parts of the pellets of the hydrogenated block copolymer D'3 obtained in Reference Example 3. The mixture was kneaded at a resin temperature of 200°C for a residence time of 60 to 70 seconds using a twin-screw extruder, and extruded in the shape of a strand. The extruded product was air-cooled, and cut using a pelletizer to obtain 95 parts of pellets of an alkoxysilyl group-containing modified hydrogenated block copolymer D"3.

After dissolving 10 parts of the pellets of the modified hydrogenated block copolymer D"3 in 100 parts of cyclohexane, the solution was poured into 400 parts of dehydrated methanol to coagulate the modified hydrogenated block copolymer D"3. The coagulate was filtered off, and dried at 25°C under vacuum to isolate 8.9 parts of crumbs of the modified hydrogenated block copolymer D"3.

The FT-IR spectrum of the crumbs of the modified hydrogenated block copolymer D"3 was measured. An absorption peak attributed to an Si-OCH₃ group was observed at 1,090 cm⁻¹, and an absorption peak attributed to an Si-CH₂ group was observed at 825 cm⁻¹ and 739 cm⁻¹. These absorption peaks were observed at positions differing from those (1,075 cm⁻¹, 808 cm⁻¹, 766 cm⁻¹) of vinyltrimethoxysilane. An absorption band based on the proton of a methoxy group was observed at 3.6 ppm in the ¹H-NMR spectrum (in deuterated chloroform). It was confirmed from the peak area ratio that 1.7 parts of vinyltrimethoxysilane was bonded to 100 parts of the hydrogenated block copolymer D'3.

### Reference Example 6

### Addition of UV absorber

4.0 parts of 2-(5-chloro-2H-benzotriazol-2-yl)-6-tert-butyl-p-cresol ("SUMISORB (registered trademark) 300" manufactured by Sumitomo Chemical Co., Ltd.) (UV absorber) and 4.0 parts of 2-(2H-benzotriazol-2-yl)-4-(1,1,3,3-tetrametylbutyl)phenol ("SUMISORB (registered trademark) 340" manufactured by Sumitomo Chemical Co., Ltd.) (UV absorber) were added to 100 parts of the pellets of the hydrogenated block copolymer D1 obtained in Reference Example 1, and the mixture was homogenously mixed, extruded at a resin temperature of 210°C using a twin-screw extruder, cooled, and cut using a pelletizer to obtain 97 parts of pellets of a resin composition E11.

Likewise, one or two UV absorbers selected from 2-(5-chloro-2H-benzotriazol-2-yl)-6-tert-butyl-p-cresol, 2-(2H-benzotriazol-2-yl)-4-(1,1,3,3-tetrametylbutyl)phenol, and 2,4-bis(α,α-dimethylbenzyl)-6-(2H-benzotriazol-2-yl)phenol ("TINUVIN (registered trademark) 234" manufactured by BASF Japan Ltd.) were added to the hydrogenated block copolymers D1, D2, D'3, and D'4 and the modified hydrogenated block copolymer D"3 obtained in Reference Examples 2 to 5 to prepare resin compositions E12, E13, E14, E21, E22, E'3, E'4, and E"3. Table 1 shows the details of the resulting resin compositions.

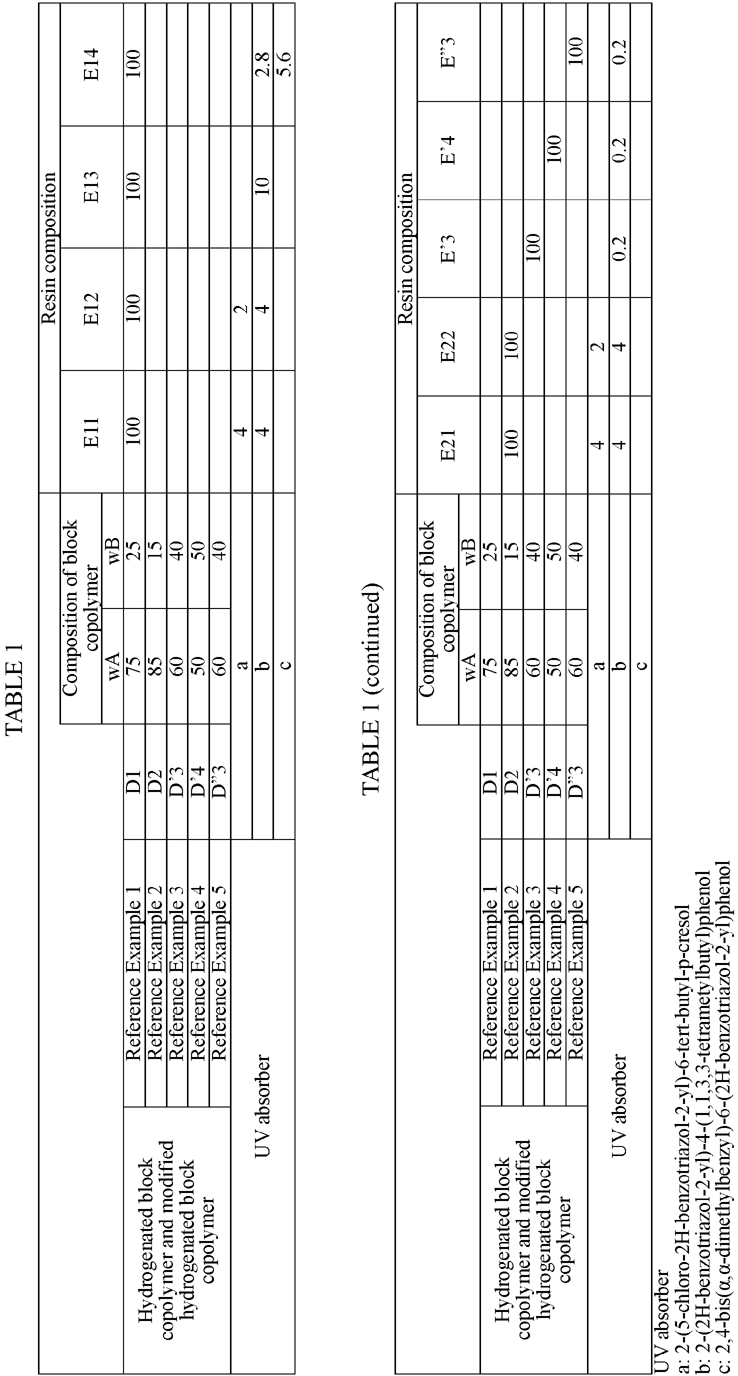

### Example 1

The resin compositions E11 and E"3 obtained in Reference Example 6 were formed using a T-die two-material/three-layer film-forming device (width of T-die: 300 mm) (provided with two single-screw extruders having a screw with a diameter of 20 mm) and a sheet take-up device provided with a mirror-finished casting roll (resin temperature: 210°C, T-die temperature: 200°C, casting roll temperature: 80°C) so that the resin composition E11 formed an intermediate film F11 and the resin composition E"3 formed a surface layer F"3 to produce a multilayer film (two-material/three-layer film). The resulting multilayer film had a three-layer structure consisting of the surface layer F"3, the intermediate film F11, and the surface layer F"3 respectively having a thickness of 5 µm, 30 µm, and 5 µm.

The surface properties, the in-plane retardation (Re), the UV-blocking properties, and the mechanical strength were evaluated using the resulting multilayer film. The surface properties were evaluated by observing the surface of the film after 2 hours had elapsed (i.e., when a film could be stably formed) from the start of the film-forming process. The evaluation results are shown in Table 2.

### Examples 2, 5 and 7; Comparative examples 4 to 6

A multilayer film (two-material/three-layer film) was produced in the same manner as in Example 1 while combining the resin compositions E12, E13, E14, E21, E22, E'3, E'4, E"3, and D1 as shown in Table 2, and the surface properties, the in-plane retardation (Re), the UV-blocking properties, and the mechanical strength were evaluated using the resulting multilayer film. The results are shown in Table 2.

### Comparative Example 1

A film formed of the resin composition E11 was produced using the two-material/three-layer film-forming device used in Example 1.

The resulting film (that was formed only of the resin composition E11) had a thickness of 30 µm.

The surface properties, the in-plane retardation (Re), the UV-blocking properties, and the mechanical strength were evaluated using the resulting film. The surface properties were evaluated by observing the surface of the film after 2 hours had elapsed (i.e., when a film could be stably formed) from the start of the film-forming process. The evaluation results are shown in Table 2.

### Comparative Example 2

A film formed of the resin composition E22 was produced in the same manner as in Comparative Example 1. The resulting film had a thickness of 30 µm.

The resulting film was evaluated in the same manner as in Comparative Example 1. The evaluation results are shown in Table 2.

### Comparative Example 3

A multilayer film (two-material/three-layer film) in which an intermediate film F22 was formed of the resin composition E22 and a surface layer F'D2 was formed of the resin composition D2 was produced using the two-material/three-layer film-forming device used in Example 1. The resulting multilayer film had a three-layer structure consisting of the surface layer F'D2, the intermediate film F22, and the surface layer F'D2 respectively having a thickness of 7 µm, 30 µm, and 7 µm.

The surface properties, the in-plane retardation (Re), the UV-blocking properties, and the mechanical strength were evaluated using the resulting multilayer film. The surface properties were evaluated by observing the surface of the film after 2 hours or more had elapsed (i.e., when a film could be stably formed) from the start of the film-forming process. The evaluation results are shown in Table 2.

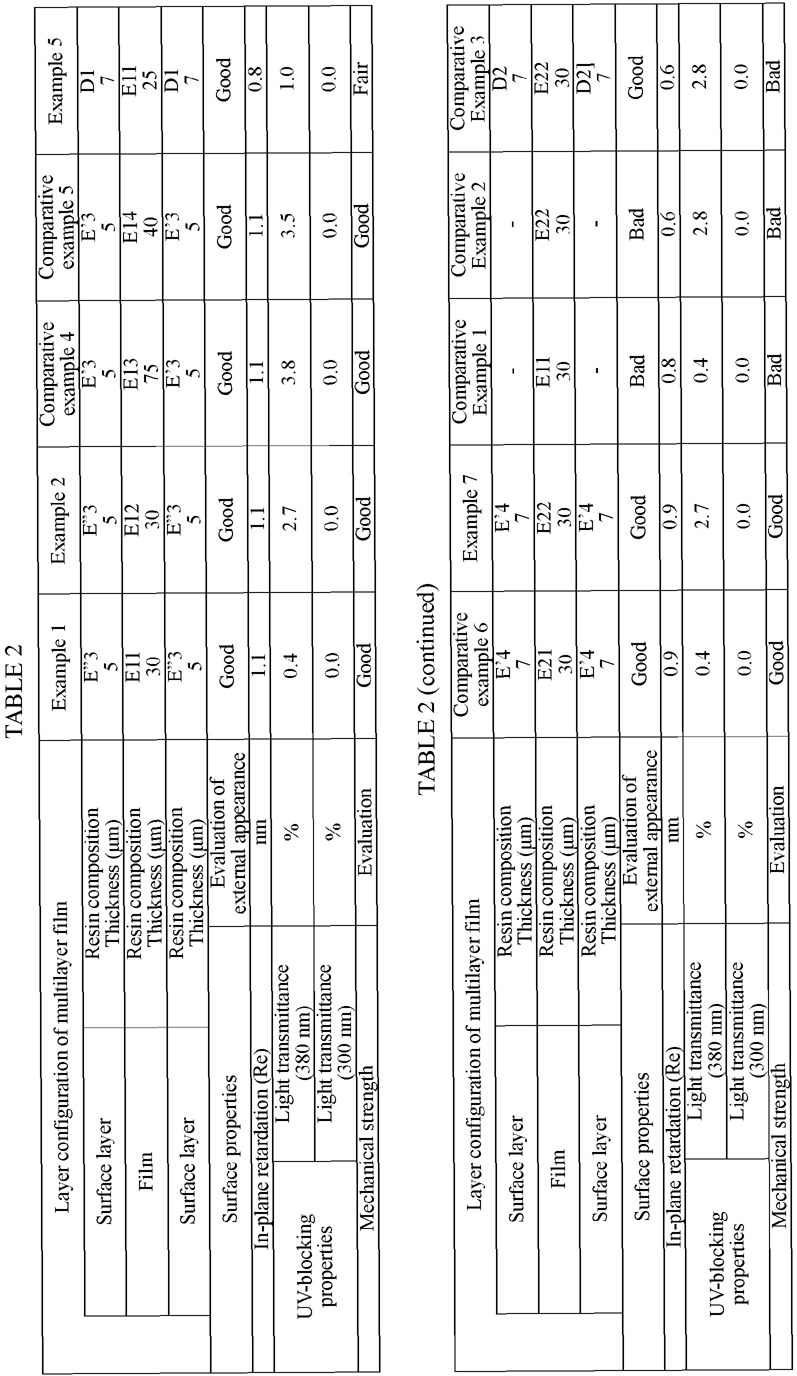

The following were confirmed from the results obtained in the examples and the comparative examples.

The multilayer film according to the embodiments of the invention had an excellent surface properties (i.e., surface roughness was not observed), exhibited improved tensile elongation (i.e., the film rarely broke during forming), exhibited excellent workability, and exhibited sufficient UV-blocking properties (Examples 1 to 7).

When the surface layer including the UV absorber in a ratio of less than the specific value was not formed, the surface properties deteriorated due to surface roughness (Comparative Examples 1 and 2).

When the surface layer was formed using the hydrogenated block copolymer in which the content of the polymer block derived from the linear conjugated diene compound was lower than the specific value, the resulting film had good surface properties, but exhibited low tensile elongation and poor workability during forming (Comparative Example 3).

### INDUSTRIAL APPLICABILITY

The multilayer film according to the embodiments of the invention exhibits excellent UV-blocking properties, small retardation, and excellent mechanical strength, has excellent surface properties (i.e., rarely shows surface roughness), and is suitable as an optical film (e.g., a polarizer protective film for a polarizing film).

## Claims

1. A multilayer film comprising a film F, and a layer F' that is stacked on one side or each side of the film F,
the film F being formed of a resin composition E that comprises a hydrogenated block copolymer D, and a UV absorber, the hydrogenated block copolymer D being obtained by hydrogenating 90% or more of unsaturated bonds of a block copolymer C that comprises at least two polymer blocks A and at least one polymer block B, the polymer block A comprising a repeating unit derived from an aromatic vinyl compound as a main component, the polymer block B comprising a repeating unit derived from a linear conjugated diene compound as a main component, and a ratio (wA:wB) of a total weight fraction wA of the polymer block A in the block copolymer C to a total weight fraction wB of the polymer block B in the block copolymer C being 40:60 to 90:10, and
the layer F' being formed of a resin composition E' that comprises a modified hydrogenated block copolymer D", and a UV absorber, the modified hydrogenated block copolymer D" being obtained by introducing an alkoxysilyl group into a hydrogenated block copolymer D', the hydrogenated block copolymer D' being obtained by hydrogenating 90% or more of unsaturated bonds of a block copolymer C' that comprises at least two polymer blocks A' and at least one polymer block B', the polymer block A' comprising a repeating unit derived from an aromatic vinyl compound as a main component, the polymer block B' comprising a repeating unit derived from a linear conjugated diene compound as a main component, and a ratio (wA':wB') of a total weight fraction wA' of the polymer block A' in the block copolymer C' to a total weight fraction wB' of the polymer block B' in the block copolymer C' being 40:60 to 80:20,
wherein the resin composition E comprises the UV absorber in a ratio of 1.0 to 10.0 parts by weight based on 100 parts by weight of the hydrogenated block copolymer D, and
wherein the resin composition E' comprises the UV absorber in a ratio of 0 parts by weight or more and less than 1.0 part by weight based on 100 parts by weight of the modified hydrogenated block copolymer D".

2. A method for producing the multilayer film according to claim 1, the method comprising producing the multilayer film using a melt extrusion method so that the layer F' comes in contact with a surface of a casting roll.

## Patentansprüche

1. Mehrschichtfilm umfassend einen Film F und eine Schicht F', die auf einer Seite oder auf jeder Seite des Films F gestapelt ist,
wobei die Folie F aus einer Harzzusammensetzung E gebildet ist, die ein hydriertes Blockcopolymer D und einen UV-Absorber umfasst, wobei das hydrierte Blockcopolymer D durch Hydrierung von 90 % oder mehr der ungesättigten Bindungen eines Blockcopolymers C erhalten wird, das mindestens zwei Polymerblöcke A und mindestens einen Polymerblock B umfasst, wobei der Polymerblock A eine sich wiederholende Einheit, die von einer aromatischen Vinylverbindung abgeleitet ist, als eine Hauptkomponente umfasst, der Polymerblock B eine sich wiederholende Einheit, die von einer linearen konjugierten Dienverbindung abgeleitet ist, als eine Hauptkomponente umfasst, und das Verhältnis (wA:wB) des Gesamtgewichtsanteils wA des Polymerblocks A in dem Blockcopolymer C zu dem Gesamtgewichtsanteil wB des Polymerblocks B in dem Blockcopolymer C 40:60 bis 90:10 beträgt, und
wobei die Schicht F' aus einer Harzzusammensetzung E' gebildet ist, die ein modifiziertes hydriertes Blockcopolymer D" und einen UV-Absorber umfasst, wobei das modifizierte hydrierte Blockcopolymer D" durch Einführen einer Alkoxysilylgruppe in ein hydriertes Blockcopolymer D' erhalten wird, wobei das hydrierte Blockcopolymer D' erhalten wird durch Hydrieren von 90% oder mehr ungesättigter Bindungen eines Blockcopolymers C', das mindestens zwei Polymerblöcke A' und mindestens einen Polymerblock B' umfasst, wobei der Polymerblock A' eine sich wiederholende Einheit, die von einer aromatischen Vinylverbindung abgeleitet ist, als eine Hauptkomponente umfasst, der Polymerblock B' eine sich wiederholende Einheit, die von einer linearen konjugierten Dienverbindung abgeleitet ist, als eine Hauptkomponente umfasst, und das Verhältnis (wA':wB') des Gesamtgewichtsanteils wA' des Polymerblocks A' in dem Blockcopolymer C' zu dem Gesamtgewichtsanteil wB' des Polymerblocks B' in dem Blockcopolymer C' 40:60 bis 80:20 beträgt,
wobei die Harzzusammensetzung E den UV-Absorber in einem Verhältnis von 1,0 bis 10,0 Gew.-Teilen, bezogen auf 100 Gew.-Teile des hydrierten Blockcopolymers D, enthält, und
wobei die Harzzusammensetzung E' den UV-Absorber in einem Verhältnis von 0 Gew.-Teilen oder mehr und weniger als 1,0 Gew.-Teilen, bezogen auf 100 Gew.-Teile des modifizierten hydrierten Blockcopolymers D", enthält.

2. Verfahren zur Herstellung der Mehrschichtfolie gemäß Anspruch 1, wobei das Verfahren die Herstellung der Mehrschichtfolie unter Verwendung eines Schmelzextrusionsverfahrens umfasst, so dass die Schicht F' mit einer Oberfläche einer Gießwalze in Kontakt kommt.

## Revendications

1. Film multicouche comprenant un film F, et une couche F' qui est empilée sur un côté ou chaque côté du film F,
le film F étant formé d'une composition de résine E qui comprend un copolymère séquencé hydrogéné D et un absorbeur UV, le copolymère séquencé hydrogéné D étant obtenu par hydrogénation de 90 % ou plus de liaisons insaturées d'un copolymère séquencé C qui comprend au moins deux blocs polymères A et au moins un bloc polymère B, le bloc polymère A comprenant un motif répétitif dérivé d'un composé vinyle aromatique en tant que composant principal, le bloc polymère B comprenant un motif répétitif dérivé d'un composé diène conjugué linéaire en tant que composant principal, et le rapport (wA/wB) de la fraction pondérale totale wA du bloc polymère A dans le copolymère séquencé C à la fraction pondérale totale wB du bloc polymère B dans le copolymère séquencé C étant de 40/60 à 90/10, et
la couche F' étant formée d'une composition de résine E' qui comprend un copolymère séquencé hydrogéné modifié D" et un absorbeur UV, le copolymère séquencé hydrogéné modifié D" étant obtenu par introduction d'un groupe alcoxysilyle dans un copolymère séquencé hydrogéné D', le copolymère séquencé hydrogéné D' étant obtenu par hydrogénation de 90 % ou plus de liaisons insaturées d'un copolymère séquencé C' qui comprend au moins deux blocs polymères A' et au moins un bloc polymère B', le bloc polymère A' comprenant un motif répétitif dérivé d'un composé vinyle aromatique en tant que composant principal, le bloc polymère B' comprenant un motif répétitif dérivé d'un composé diène conjugué linéaire en tant que composant principal, et le rapport (wA'/wB') de la fraction pondérale totale wA' du bloc polymère A' dans le copolymère séquencé C' à la fraction pondérale totale wB' du bloc polymère B' dans le copolymère séquencé C' étant de 40/60 à 80/20,
dans lequel la composition de résine E comprend l'absorbeur UV en une proportion de 1,0 à 10,0 parties en poids pour 100 parties en poids du copolymère séquencé hydrogéné D, et
dans laquelle la composition de résine E' comprend l'absorbeur UV en une proportion de 0 partie en poids ou plus et de moins de 1,0 partie en poids pour 100 parties en poids du copolymère séquencé hydrogéné modifié D".

2. Procédé pour produire le film multicouche de la revendication 1, le procédé comprenant la production du film multicouche par utilisation d'un procédé d'extrusion à l'état fondu de façon que la couche F' vienne en contact avec une surface d'un rouleau de coulée.
